# EUROPÄISCHE PATENTSCHRIFT

(11) **EP 0 708 115 B1**
(45) Veröffentlichungstag und Bekanntmachung des Hinweises auf die Patenterteilung: **16.07.1997**
(21) Anmeldenummer: 95115831.0
(22) Anmeldetag: 07.10.1995
(51) Int. Cl.: C08F 8/14, C08F 8/34, C08G 63/00, C08G 18/62

(54) **Alpha, Omega-Polymethacrylatdicarbonsäuren, deren Herstellung und Verwendung als Dicarbonsäurekomponente zur Herstellung oder Modifizierung von Polyestern, Polyurethanen oder Polyepoxiden**
Alpha, omega-polymethacrylate dicarboxylic acids, manufacture and use thereof as dicarboxylic acid components for the manufacture or modification of polyesters, polyurethanes or polyepoxides
Alpha, oméga-acides dicarboxyliques de polyméthacrylate, leur préparation et leur application comme composants d'acide dicarboxylique à la préparation ou la modification de polyesters, de polyuréthanes ou de polyépoxydes

(30) Priorität: 21.10.1994 DE 4437673
(43) Veröffentlichungstag der Anmeldung: 24.04.1996
(73) Patentinhaber: Th. Goldschmidt AG, 45127 Essen (DE)
(72) Erfinder: Esselborn, Eberhard, D-45147 Essen (DE); Fock, Jürgen, Dr., D-40470 Düsseldorf (DE)

(56) Entgegenhaltungen:
- EP-A- 0 205 846
- EP-A- 0 438 215
- EP-A- 0 522 376
- EP-A- 0 613 910
- FR-A- 1 416 397
- US-A- 4 593 081

## Beschreibung

Die Erfindung betrifft α,ω-Polymethacrylatdicarbonsäuren, welche aufgrund ihrer endständigen Carboxylgruppen reaktive Komponenten zur Herstellung von Kunststoffen des Typs ABA oder (AB)ₘA, wobei m eine ganze Zahl ≥ 1 ist, sind.

Die Erfindung betrifft ferner die Herstellung dieser α,ω-Polymethacrylatdicarbonsäuren.

Die Erfindung betrifft schließlich die Verwendung dieser α,ω-Polymethacrylatdicarbonsäuren als alleinige oder anteilige Komponente zur Herstellung oder Modifizierung von Polyepoxiden, Polyestern, Polyamiden, Polyurethanen oder Alkydharzen.

Die Herstellung von Polymethacrylaten mit endständig funktionellen Gruppen wurde in den letzten Jahren auf verschiedenartige Weise versucht. An derartigen Verbindungen besteht ein besonderer Bedarf, da Polymethacrylate mit endständig funktionellen Gruppen in besonderer Weise zur Herstellung von Blockmischpolymerisaten geeignet sind, indem man die endständig funktionellen Polymethacrylate mit endständig funktionellen Polymerisaten anderen Aufbaus umsetzt. So kann man z. B. Polymethacrylate mit endständig funktionellen Carbonsäuren mit Polymerisaten umsetzen, welche endständig z. B. Hydroxylgruppen aufweisen. Man erhält Polyester, deren Eigenschaften und struktureller Aufbau durch die Wahl des Polymethacrylates und des Diols sowie durch das Umsetzungsverhältnis beeinflußt werden können.

Man hat dabei insbesondere Versuche unternommen, derartige Polymethacrylate, z. B. Polymethacrylatdiole, durch eine Group-Transfer-Polymerisation zu erhalten. Voraussetzung für die Durchführung einer Group-Transfer-Polymerisation ist allerdings eine extrem hohe Reinheit der verwendeten Reagenzien und der sorgfältige Ausschluß von Luftfeuchtigkeit. Durch die Verwendung von nur mit sehr hohem Aufwand herstellbaren Initiatoren mit geschützten funktionellen Gruppen (siehe Houben-Weyl, Methoden der organischen Chemie, Band E 20 / Teil 1, Tab. 18, S. 158 ff.) gelangt man aber nur zu monofunktionellen Polymeren, die eine enge Molekulargewichtsverteilung aufweisen. Die Synthese von α,ω-difunktionellen Polymeren ist aber über diesen bislang einzigen Zugang nicht oder nur mit hohem Aufwand in unvollständiger Weise möglich (D.Y. Sogah und O.W. Webster, J. Polym. Sci., Polym. Lett. Ed. 21, 927 (1983)).

Ein weiterer Syntheseweg zur Herstellung α,ω-terminierter Polymethacrylate wurde in jüngster Zeit unter Verwendung von Thiuramdisulfiden nach der sogenannten _{"}Iniferter"-Technik (Initiator, Transferagens, Terminator) beschritten. Zwar weisen die erhaltenen Produkte eine Funktionalität auf, die der erwünschten Funktionalität von 2 nahekommt, sie sind jedoch, bedingt durch die hohe Empfindlichkeit gegen hydrolytische und thermisch-oxidative Belastungen, nur begrenzt einsetzbar (C.P. Reghunadham et al., J. Polym. Sci., Part A: Pol.Chem. 27, 1795 (1989)).

Überraschenderweise wurde bei Arbeiten, die zu der vorliegenden Erfindung geführt haben, ein Verfahrensweg aufgefunden, der in einfacher Weise das technische Problem der Herstellbarkeit von α,ω-Polymethacrylatdicarbonsäuren löst, wobei die α,ω-Polymethacrylatdicarbonsäuren im wesentlichen frei von Verbindungen sind, welche eine Funktionalität kleiner oder größer 2 aufweisen.

Ein erster Gegenstand der vorliegenden Erfindung sind somit α,ω-Polymethacrylatdicarbonsäuren der allgemeinen Formel 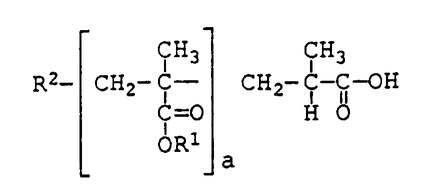 wobei
- R¹: ein gegebenenfalls halogenierter Alkylrest mit 1 bis 22 Kohlenstoffatomen ist, wobei der Rest R¹ im polymeren Molekül unterschiedliche Bedeutung annehmen kann,
- R²: der Rest eines an sich bekannten Kettenreglers, welcher endständig eine -COOH Gruppe aufweist, ist und
- a: einen Wert von ≥ 4 hat.

R¹ ist ein Alkyrest, welcher von dem Alkohol R¹OH abgeleitet ist, mit welchem die monomere Methacrylsäure vor der Polymerisation verestert worden ist. Da zur Herstellung des Polymerisates monomere Methacrylsäureester unterschiedlicher Esterkomponenten eingesetzt werden können, kann der Rest R¹ im polymeren Molekül unterschiedliche Bedeutung annehmen. Vorzugsweise ist der Rest R¹ ein Alkylrest mit 1 bis 8 Kohlenstoffatomen, wie der Methyl-, Ethyl-, Propyl-, Butyl- oder Octylrest. Die Alkylreste können gegebenenfalls verzweigt und/oder halogeniert sein. Durch die Wahl des Restes R¹ können die Eigenschaften der erfindungsgemäßen α,ω-Polymethacrylatdicarbonsäuren in gewünschter Weise und gezielt verändert werden. So ist es spielsweise möglich, die Verträglichkeit mit unpolaren Verbindungen dadurch zu erhöhen, daß man Reste R¹ mit höherer Kohlenstoffanzahl auswählt. Man wird zwar nur in seltenen Fällen ausschließlich Reste R¹ mit 22 Kohlenstoffatomen verwenden. Es ist jedoch möglich, erfindungsgemäße Verbindungen vorzusehen, bei denen z. B. 90 % der Reste R¹ die Bedeutung eines Alkylrestes mit 1 bis 4 Kohlenstoffatomen und 10 % der Reste R¹ die Bedeutung eines Alkylrestes mit z. B. 18 bis 22 Kohlenstoffatomen haben.

R² ist der Rest eines an sich bekannten Kettenreglers, welcher endständig eine -COOH Gruppe aufweist. Es ist dabei besonders bevorzugt, daß der Rest R²
(I) ein Rest der allgemeinen Formel -S-R³COOH ist, wobei R³ einen gegebenenfalls verzweigten zweiwertigen Alkylenrest mit 1 bis 8 Kohlenstoffatomen bedeutet, oder
(II) ein Rest der allgemeinen Formel 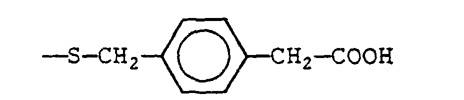 ist.

Beispiele für Reste R² mit der Bedeutung (I) sind:

-S-CH₂-COOH

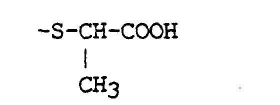

-S-(CH₂)₂-COOH

-S-(CH₂)₄-COOH

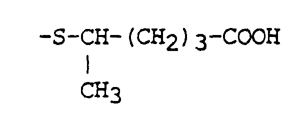

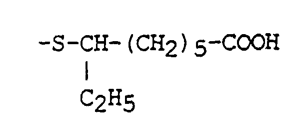

Der Index a hat einen Wert von ≥ 4. Vorzugsweise hat a einen Wert von 4 bis 100, besonders bevorzugt einen Wert von 4 bis 20.

Beispiele für erfindungsgemäße α,ω-Polymethacrylatdicarbonsäuren sind

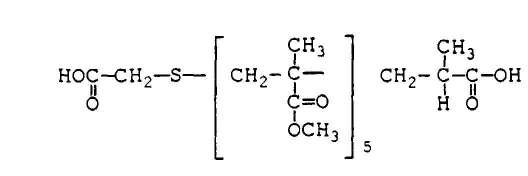

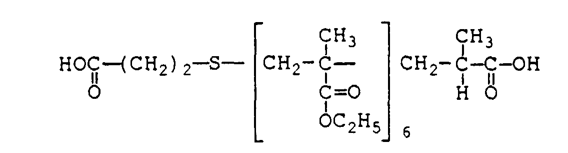

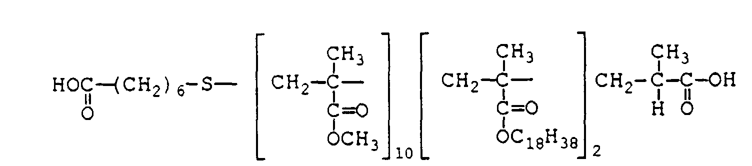

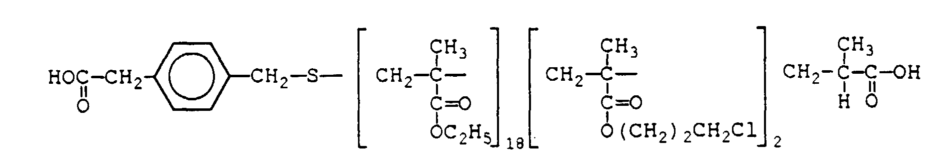

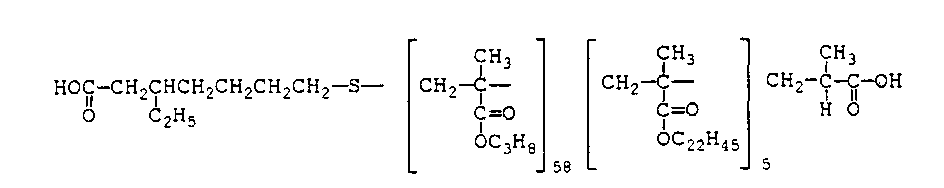

Ein weiterer Gegenstand der Erfindung ist durch die Herstellung der erfindungsgemäßen α,ω-Polymethacrylatdicarbonsäuren gegeben. Das erfindungsgemäße Verfahren ist dadurch gekennzeichnet, daß man Methacrylsäureester der allgemeinen Formel 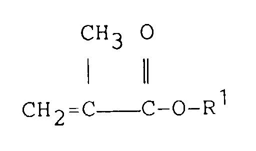 in Gegenwart von Kettenreglern, welche endständig eine -COOR⁴ Gruppe aufweisen, wobei R⁴ ein Wasserstoffrest oder eine Alkylgruppe mit 1 bis 4 Kohlenstoffatomen ist, radikalisch polymerisiert und das erhaltene Polymerisat der vereinfachten allgemeinen Formel 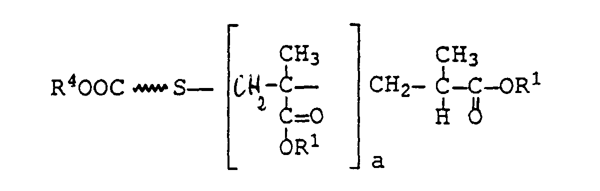 unter milden Bedingungen mit, bezogen auf R⁴ = Alkylrest und R¹ = Alkylrest, jeweils 1- bis 2molaren Mengen Alkalihydroxid verseift und durch Neutralisation mit Säure in die gewünschten α,ω-Polymethacrylatdicarbonsäuren überführt. Die Verseifung kann aber auch durch eine anorganische oder organische Säure geschehen, wobei die gewünschten α,ω-Polymethacrylatdicarbonsäuren direkt erhalten werden.

Die radikalische Polymerisation der monomeren Methacrylsäureester der Formel 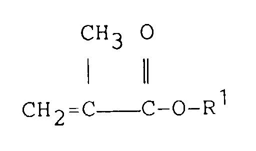 erfolgt in an sich bekannter Weise; dies bedeutet, daß die Reaktion im allgemeinen in Gegenwart eines geeigneten Lösungsmittels, wie z. B. Toluol, durchgeführt wird. Das Lösungsmittel wird zweckmäßig unter Verwendung von Reinstickstoff entgast und auf Reaktionstemperatur erwärmt. Die Reaktionstemperatur beträgt etwa 100 °C. Zu dem Lösungsmittel werden nun der monomere Methacrylsäureester, der Kettenregler und ein geeigneter Initiator, wie z. B. Azodiisobuttersäuredinitril, über einen Zeitraum von etwa 2 bis 5 Stunden verteilt zugegeben. Nach einer entsprechenden Nachreaktion, deren Dauer zwischen 1 und 2 Stunden liegen kann, ist die Polymerisationsreaktion beendet, und das Produkt wird vom Lösungsmittel befreit. Im allgemeinen sind die polymeren Substanzen hochviskose, transparente und leicht gelbliche Flüssigkeiten.

Der verwendete Kettenregler hat die Formel R²-H, wobei es jedoch möglich ist, daß die Carboxylgruppe des Kettenreglers in veresterter Form vorliegen kann. Der Kettenregler hat dann somit die vereinfachte Formel

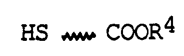

Das Symbol 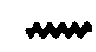 bedeutet dabei die Gruppe R³ oder die Gruppe 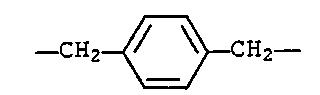 R⁴ kann also ein Wasserstoffrest oder eine Alkylgruppe mit 1 bis 4 Kohlenstoffatomen sein.

Man erhält zunächst als Zwischenprodukt ein Polymerisat der vereinfachten allgemeinen Formel

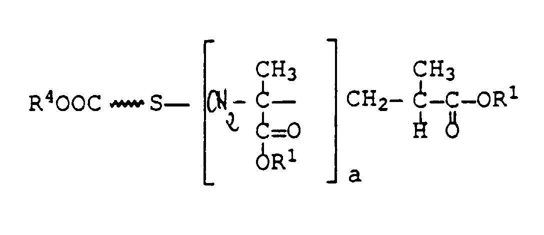

Dieses Zwischenprodukt wird nun unter milden Bedingungen mit Alkalihydroxid oder mit einer anorganischen oder organischen Säure verseift. Man verwendet dabei, bezogen auf die Gruppe R¹ und die Gruppe R⁴, vorausgesetzt, daß die Gruppe R⁴ eine Alkylgruppe mit 1 bis 4 Kohlenstoffatomen ist, jeweils 1- bis 2molare Mengen. Unter diesen Bedingungen bleiben Estergruppen in der Polymethacrylatkette erhalten.

Unter dem Begriff der Verseifung unter milden Bedingungen ist eine Verseifung zu verstehen, die bei einem Temperaturbereich von etwa 80 bis 100 °C bei normalem oder bis auf 5 bar erhöhtem Druck vorgenommen wird. Als Alkalihydroxid ist insbesondere Natriumhydroxid geeignet.

Die Polymerisate liegen nun in Form der in α,ω-Stellung befindlichen COO⁻Alkaliion⁺Salze vor und werden gegebenenfalls neutralisiert. Durch Umsetzung mit einer stärkeren Säure, z. B. einer Mineralsäure, insbesondere Phosphorsäure oder Salzsäure, werden die gewünschten α,ω-Polymethacrylatdicarbonsäuren gemäß der Erfindung unmittelbar erhalten. Das nach Neutralisation gebildete Salz kann durch Auflösen des Polymerisats in einem geeigneten Lösungsmittel, in welchem das Salz nicht löslich ist, abgetrennt werden.

Ein weiterer Gegenstand vorliegender Erfindung ist die Verwendung der erfindungsgemäßen α,ω-Polymethacrylatdicarbonsäuren als reaktive Polymere zur Umsetzung mit anderen reaktiven Polymeren unterschiedlicher Funktionalität, deren reaktive Gruppen in der Lage sind, mit den Carboxylgruppen der erfindungsgemäßen Verbindungen zu reagieren. Vorzugsweise verwendet man als Reaktionskomponenten mono- oder difunktionelle polymere Verbindungen, so daß man Blockmischpolymerisate der Formel ABA oder (AB)ₘA erhält.

Beispiele für die Verwendung der erfindungsgemäßen Verbindungen sind:
1. Umsetzung der α,ω-Polymethacrylatdicarbonsäure mit Di- oder Polyepoxiden
2. Umsetzung der α,ω-Polymethacrylatdicarbonsäure mit Alkylendiolen oder Polyoxyalkylendiolen zur Herstellung von Polyestern
3. Umsetzung der α,ω-Polymethacrylatdicarbonsäure mit Alkylendiaminen zu Polyamiden
4. Umsetzung mit Alkydharzen
5. Umsetzung mit Polyurethanen
6. Umsetzung mit Diisocyanaten

Die vorgenannten Reaktionen sind nur als allgemeine Reaktionsschemata zu verstehen, denn es ist möglich, die erfindungsgemäßen Verbindungen als alleinige Reaktionskomponente oder als anteilige Reaktionskomponente neben anderen Dicarbonsäuren einzusetzen. So ist es beispielsweise möglich, bei der Herstellung von Polyestern einen Teil der üblicherweise verwendeten Dicarbonsäuren durch die erfindungsgemäße α,ω-Polymethacrylatdicarbonsäure zu ersetzen. Je nach anteiliger Menge der erfindungsgemäßen α,ω-Polymethacrylatdicarbonsäure an der Gesamtmenge der Dicarbonsäuren ist eine Modifizierung der Eigenschaften der Endprodukte möglich.

Als Epoxidharze können im Prinzip die dem Fachmann bekannten Epoxidharze verwendet werden. Besonders bevorzugt sind Epoxidharze auf Basis der Umsetzungsprodukte von Bisphenol A oder F und Epichlorhydrin. Weitere Beispiele von Epoxidharzen sind die Di- bzw. Polyglycidylether von mehrwertigen aliphatischen Alkoholen, wie Butandiol-1,4, oder Polyalkylenglykolen, wie Propylenglykole; Di- oder Polyglycidylether von cycloaliphatischen Polyolen, wie 2,2-Bis(p-hydroxycyclohexyl)-propan; Di- oder Polyglycidylether von mehrwertigen Phenolen, wie Resorcin, 2,2-Bis-(4'-hydroxy-3',5"-dibromphenyl)-propan, oder von unter sauren Bedingungen erhaltenen Kondensationsprodukten von Phenolen mit Formaldehyd, wie Phenol-Novolake und Kresol-Novolake; Polyglycidylester von mehrwertigen Carbonsäuren, wie Phthalsäure, Terephthalsäure, Tetrahydrophthalsäure und Hexahydrophthalsäure; N-Glycidylderivate von Aminen, Amiden und heterocyclischen Stickstoffbasen, wie
N,N-Diglycidylanilin,
N,N-Diglycidyltoluidin,
N,N,N',N'-Tetraglycidyl-bis-(p-aminophenyl)-methan, Triglycidylisocyanurat,
N,N'-Diglycidylethylenharnstoff,
N,N'-Diglycidyl-5,5-dimethyl-hydantoin,
N,N'-Diglycidyl-5,5-dimethyl-6-isopropyl-5,6-dihydrouracil,
und weitere Epoxidharze, wie sie z. B. in H. Jahn ,,Epoxidharze", VEB Deutscher Verlag für Grundstoffindustrie, Leipzig, 1969, oder in H. Batzer und F. Lohse "Ullmanns Enzyklopädie der technischen Chemie", Band 10, S. 563 ff., 4. Auflage, Verlag Chemie, Weinheim, 1975, beschrieben sind.

Die Modifizierung der Epoxidharze kann auf verschiedene Weise erfolgen. So ist es möglich, die vorgesehene Menge Modifizierungsmittel der Gesamtmenge des Epoxidharzes zuzusetzen. Wenn auch die Reaktion der Carboxylgrupppen des Modifizierungsmittels mit den Epoxidgruppen des Epoxidharzes bereits bei Raumtemperatur einsetzt, ist es doch bevorzugt, das Gemisch auf Temperaturen von 100 bis 150 °C zu erwärmen. Die Umsetzung verläuft dann innerhalb von 30 Minuten bis zu 4 Stunden. Man kann jedoch die vorgesehene Menge Modifizierungsmittel nur einem Teil der Gesamtmenge des Epoxidharzes zusetzen. Man muß nur beachten, daß diese modifizierte Teilmenge des Epoxidharzes noch genügend Epoxidgruppen aufweist, daß beim Vermischen dieser Menge mit dem restlichen Epoxidharz und dem nachfolgenden Aushärten ein reaktiver Einbau dieser modifizierten Teilmenge gewahrleistet ist. Es genügt, wenn die modifizierte Teilmenge noch etwa 40 Mol-% der ursprünglich vorhandenen Epoxidgruppen aufweist. Der Vorteil dieser Verfahrensweise besteht darin, daß die Modifizierung bereits beim Hersteller erfolgen kann. Es ist weiter möglich, die Teilmodifizierung mit einem Epoxidharz durchzuführen, dessen Zusammensetzung von der der restlichen Menge Epoxidharz abweicht. Insbesondere kann man die Teilmodifizierung mit einem niedrigviskosen Epoxidharz durchführen. Hierfür eignen sich besonders die Diglycidylether aliphatischer Diole, z. B. des Butandiols-1,4, Hexandiols-1,6 oder des Neopentylglykols.

Es kann von Vorteil sein, wenn man dem Gemisch aus Epoxidharz und Modifizierungsmittel einen Katalysator in wirksamen Mengen zusetzt, der die Modifizierungsreaktion beschleunigt. Besonders bevorzugt sind als Katalysatoren quaternäre Ammonium- oder Phosphoniumverbindungen, wie z. B. Tetramethylammoniumchlorid oder -jodid, Benzyltrimethylammoniumchlorid, Tetrabutylphosphoniumchlorid oder -acetat.

Für die Härtung der modifizierten Epoxidharze kann man die aus dem Stand der Technik bekannten Härter verwenden. Die folgenden Härter sind insbesondere für die Heißhärtung, d. h. die Härtung bei Temperaturen oberhalb 130 °C bis etwa 220 °C, brauchbar: Dicyandiamid und dessen Derivate; Polycarbonsäureanhydride, wie Phthalsäureanhydrid; Methylhexahydrophthalsäureanhydrid; mellitsäuredianhydrid. Für Warmhärtung bei Temperaturen um 100 °C eignen sich aromatische Polyamine, wie m-Phenylendiamin, cycloaliphatische Polyamine. Die Härtung bei Raumtemperatur kann mit Polyaminoamiden, Polyaminoimidazolinen, modifizierten aliphatischen Polyaminen oder Polyetherpolyaminen durchgeführt werden. Für die Härtung bei Raumtemperatur eignen sich besonders die Polyaminoamide bzw. Polyaminoimidazoline. Man erhält mit ihnen bei Verwendung der erfindungsgemäßen Modifizierungsmittel besonders hohe Steigerungen der Festigkeitswerte.

Die jeweilige Härtungstemperatur und/oder die Härtungszeit kann durch Verwendung bekannter Beschleuniger herabgesetzt bzw. verkürzt werden. Solche Beschleuniger sind z. B. tertiäre Amine.

Die erfindungsgemäß modifizierten Epoxidharze eignen sich in besonderer Weise als Klebstoffe, da sie gut an den zu verbindenden Grenzflächen haften und eine elastische Klebfuge ausbilden. Man kann aber auch mit den modifizierten, jedoch noch nicht ausgehärteten Epoxidharzen Trägerbahnen, wie z. B. Glasfaservliese oder Gewebe, imprägnieren und zu Schichtstoffen aushärten. Sie können z. B. in der Elektroindustrie zur Herstellung von gedruckten Schaltungen verwendet werden. Eine weitere Einsatzmöglichkeit dieser sogenannten Prepregs besteht in der Herstellung von Formteilen, wie z. B. im Bootsbau, sowie für Reparaturzwecke, z. B. im Karosseriebau. Des weiteren ist eine Verwendung der modifizierten Epoxidharze als Lackrohstoffe oder als Gießharze vorteilhaft.

In den folgenden Beispielen wird zunächst die Herstellung der erfindungsgemäßen α,ω-Polymethacrylatdicarbonsäuren gezeigt. In einer weiteren Reihe von Beispielen wird die erfindungsgemäße Verwendung dieser Verbindungen als alleinige oder anteilige Komponente zur Herstellung oder Modifizierung von Epoxidharzen näher beschrieben.

### Beispiel 1

### Herstellung einer α,ω-Polymethacrylatdicarbonsäure

### a) Herstellung eines mit Mercaptoessigsäuremethylester geregelten Polymethylmethacrylatmonomethylesters

In der ersten Stufe der Synthese wird ein ω-Polymethylmethacrylatmonomethylester hergestellt. Dazu werden in einem Reaktor 100 g Xylol unter Reinstickstoff auf 100 °C erhitzt. Zu dieser Vorlage wird eine Lösung von 894 g (ca. 8,9 Mol) Methylmethacrylat, 106 g (ca. 1 Mol) Mercaptoessigsäuremethylester und 3 g Azodiisobuttersäuredinitril, gelöst in 100 g Xylol, mit konstanter Geschwindigkeit innerhalb von 180 Minuten zugetropft. Nach einer Nachreaktion mit einer Dauer von 60 Minuten bei 100 °C wird die Reaktion beendet.

Das entstandene Produkt wird anschließend durch Destillation bei 150 °C und 1 Torr vom Lösungsmittel, von Restmonomeren und nicht umgesetzten Kettenreglern befreit; es verbleibt eine hochviskose, transparente und leicht gelb gefärbte Flüssigkeit. Zur besseren Handhabung wird das Produkt mit Methanol zu einer 80 %igen Lösung verdünnt.

Aus der gelchromatographischen Untersuchung ergibt sich für das erhaltene Vorprodukt (Precursor) ein numerisches Molekulargewicht M_{nGPC(P)} von 1070 und für das Gewichtsmittel des largewichtes M_{wGPC(P)} von 2030; der Uneinheitlichkeitskoeffizient M_{w}/M_{n(P)} beträgt demnach 1,9. Das durch Dampfdruckosmometrie ermittelte Molekulargewicht M_{nOsm(P)} beträgt 1060. Der Gehalt an Restmonomeren ist < 0,1 %.

### b) Herstellung der α,ω-Polymethylmethacrylatdicarbonsäure durch selektive Endgruppenverseifung

97,4 g (ca. 0,1 Mol) des Produktes aus Beispiel 1 a, gelöst in 24,4 g Methanol, werden innerhalb von 2 h bei 60 °C mit 42 g (0,21 Mol) 20 %iger Natronlauge in einem Reaktor unter Reinstickstoff umgesetzt. Die Reaktion wird beendet, wenn die Alkalizahl einen Wert ≤ 0,5 erreicht hat; dies ist in der Regel nach 2 h der Fall.

Anschließend werden zur Überführung des Alkalisalzes in die freie Säure 57,1 g (0,175 Mol) 30 %iger Phosphorsäure zugesetzt. Durch Entfernen aller flüchtigen Bestandteile über eine Destillation bei 120 °C und 1 Torr kristallisiert Natriumphosphat bzw. -hydrogenphosphat aus, welches nach Zusatz von 60 g Toluol und Filterhilfsmittel filtriert wird, wobei eine klare Lösung erhalten wird.

Aus der gelchromatrographischen Untersuchung ergibt sich für das erhaltene Polymerisat ein numerisches Molekulargewicht M_{nGPC} von 990 und das Gewichtsmittel M_{wGPC} von 1880; der heitlichkeitskoeffizient M_{wGPC}/M_{nGPC} beträgt demnach 1,9 unter Annahme einer Funktionalität von 2. Das durch Dampfdruckosmometrie ermittelte Molekulargewicht M_{nOsm} beträgt 990. Unter Annahme einer Funktionalität von 2 ergibt sich aus der Säurezahl ein Molekulargewicht M_{nAN} von 960. Die aus der Säurezahl und M_{nOsm} ermittelte Funktionalität beträgt 2,06. Mit Hilfe der MALDI-Analyse (Matrix Assisted Laser Desorption Ionisation Spectroscopy), einer Methode zur Ermittlung der absoluten Molekulargewichte, läßt sich eine Homologenreihe erkennen, deren Lage unter Berücksichtigung des im System befindlichen Alkaliions exakt dem berechneten difunktionellen Polymethacrylat entspricht.

### Beispiele 2 bis 6

### Herstellung von α,ω-Poly-n-butyl- bzw. -2-ethylhexylmethacrylatdicarbonsäuren unterschiedlichen Molekulargewichtes

Es wird grundsätzlich wie in Beispiel 1 verfahren mit dem Unterschied, daß anstelle von Methylmethacrylat n-Butylmethacrylat bzw. 2-Ethylhexylmethacrylat in unterschiedlicher Menge eingesetzt und, wie aus Tabelle 1 hervorgeht, die Menge an Kettenübertragungsagens, Initiator und Xylol variiert wird.

In Tabelle 1 finden sich darüber hinaus die durch gelchromatographische Untersuchung ermittelten Zahlen- und Gewichtsmittel der Molekulargewichte M_{nGPC(P)} bzw. M_{wGPC(P)} und die entsprechenden Uneinheitlichkeitskoeffizienten M_{wGPC(P)}/M_{nGPC(P)} sowie die durch dampfdruckosmometrische Messung erhaltenen Molekulargewichte M_{nOsm(P)} der Vorprodukte sowie die Molekulargewichte M_{nGPC} und M_{wGPC}, die entsprechenden Uneinheitlichkeitskoeffizienten M_{wGPC}/M_{nGPC}, die Molekulargewichte M_{nOsm} und die unter Annahme einer Funktionalität von 2 aus der Säurezahl ermittelten Molekulargewichte M_{nAN} der α,ω-Polymethacrylatdicarbonsäuren. Schließlich werden die mit Hilfe von M_{nOsm} und der Säurezahl berechneten Funktionalitäten F der Endprodukte gezeigt.

### Beispiel 7

### Herstellung einer α,ω-Methylmethacrylat-2-ethylhexylmethacrylat-copolymerisatdicarbonsäure

Es wird grundsätzlich wie in Beispiel 1 verfahren mit dem Unterschied, daß neben Methylmethacrylat 2-Ethylhexylmethacrylat eingesetzt wird.

Aus Tabelle 1 geht die eingesetzte Menge und das Verhältnis beider Monomerer, die Menge an Kettenübertragungsagens, an Initiator und an Xylol hervor. Darüber hinaus finden sich in Tabelle 1 die durch gelchromatrographische Untersuchung ermittelten Zahlen- und Gewichtsmittel der Molekulargewichte M_{nGPC(P)} bzw. M_{wGPC(P)} und die entsprechenden Uneinheitlichkeitskoeffizienten M_{wGPC(P)}/M_{nGPC(P)} sowie die durch dampfdruckosmometrische Messung erhaltenen Molekulargewichte M_{nOsm(P)} der Vorprodukte (Precursor) sowie die Molekulargewichte M_{nGPC} bzw. M_{wGPC} und die entsprechenden Uneinheitlichkeitskoeffizienten M_{wGPC}/M_{nGPC} der α,ω-Polymethacrylatdicarbonsäuren. Schließlich werden die mit Hilfe von M_{nOsm} und der Säurezahl M_{nAN} berechneten Funktionalitäten F der Endprodukte gezeigt.

### Beispiele 1 A bis 5 A (Anwendungstechnische Beispiele)

### Herstellung und Prüfung von mit α,ω-Polymethacrylatdicarbonsäuren modifizierten Epoxidharzen

Zur Herstellung der modifzierten Epoxidharze werden Gemische aus einem Epoxidharz aus Bisphenol A/Epichlorhydrin mit einem Epoxidäquivalent von 185 g/Mol mit wechselnden Mengen der α,ω-Polymethacrylatdicarbonsäuren nach Zusatz von 0,03 Gew.-% Tetramethylammoniumchlorid unter Rühren und Überleiten von Stickstoff 2 h auf 120 °C erhitzt. Nach dem Abkühlen erhält man bei Raumtemperatur flüssige Epoxidharze, deren Viskosität von der des unmodifzierten Epoxidharzes nicht wesentlich abweicht. In Tabelle 2 sind die Art der verwendeten α,ω-Polymethacrylatdicarbonsäuren sowie deren Mengenverhältnisse gegenüber dem Epoxidharz aufgeführt.

Für die Härtung werden zwei verschiedene Polyaminhärter eingesetzt:
a) handelsübliches Polyaminoamid, H-Äquivalent 165, Viskosität bei 75 °C 800 mPas;
b) handelsübliches Polyaminoimidazolin, H-Äquivalent 95, Viskosität bei 25 °C 2500 mPas.

Die Härter werden den modifizierten Epoxidharzen in äquivalenten Mengen zugesetzt.

Die anwendungstechnische Prüfung der Epoxidharz-/Härtergemische erfolgt durch Ermittlung der Bindefestigkeit (Zugscherfestigkeit) nach DIN 53 283.

Für die Bindefestigkeit werden 1,6 mm starke Aluminiumbleche der Qualität AlCuMg 2pl verwendet. Die Bleche werden vor dem Kleben entfettet und einem Chromat-Schwefelsäure-Beizprozeß (Pickling-Beize) unterzogen.

Das Klebmittel wird in einer Menge von 50 g/m² auf die Prüfbleche aufgetragen und bei Raumtemperatur innerhalb von 3 Tagen gehärtet. Danach werden die Prüfkörper noch 1 h bei 100 °C gelagert, um die Aushärtung zu vervollständigen. Die bei Raumtemperatur erhaltenen Bindefestigkeitswerte sind in Tabelle 2 aufgeführt. Sie zeigen, daß die Bindefestigkeit erheblich ansteigt, wenn die erfindungsgemäß modifizierten Epoxidharze verwendet werden.

Des weiteren wird mit dem Polyaminoamidhärter a) (H-Äquivalent 165) und den Epoxidharzen die Rollenschälfestigkeit nach DIN 53 289 ermittelt, wobei 0,5 mm starke Aluminiumbleche von 1,6 mm starken Aluminiumblechen geschält werden. Die Qualität der Aluminiumbleche, deren Vorbehandlung und die Aushärtungsbedingungen der Kleber sind dabei unverändert. Die erhaltenen Schälfestigkeitswerte sind in der letzten Spalte der Tabelle 2 aufgeführt. Es ist ersichtlich, daß selbst bei Verwendung eines Polyaminoamids als Härter, der den Epoxidharzen an sich bereits eine höhere Flexibilität verleiht, eine zusätzliche Steigerung der Schälfestigkeitswerte erhalten wird, wenn man die mit α,ω-Polymethacrylatdicarbonsäuren modifizierten Epoxidharze verwendet.

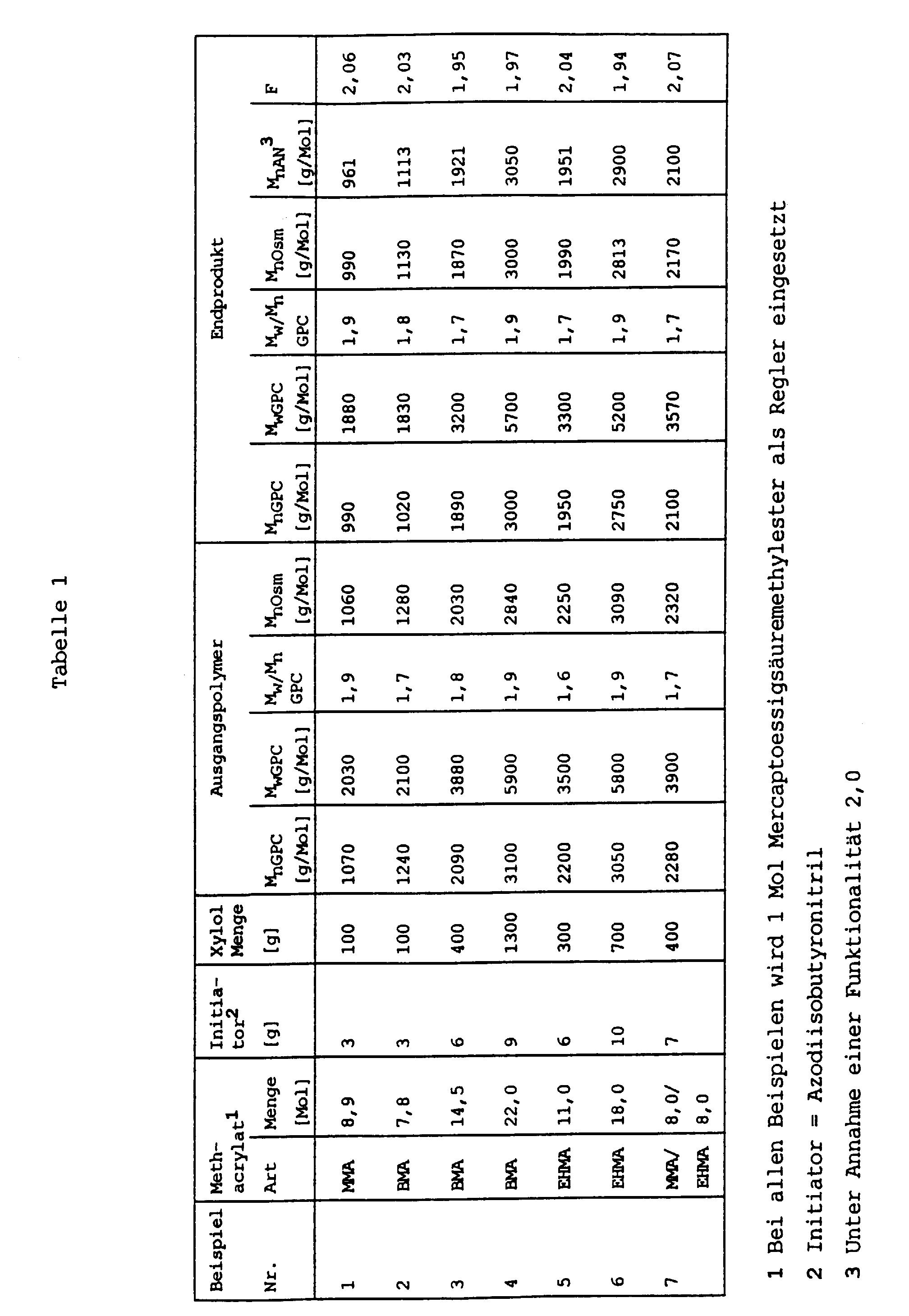

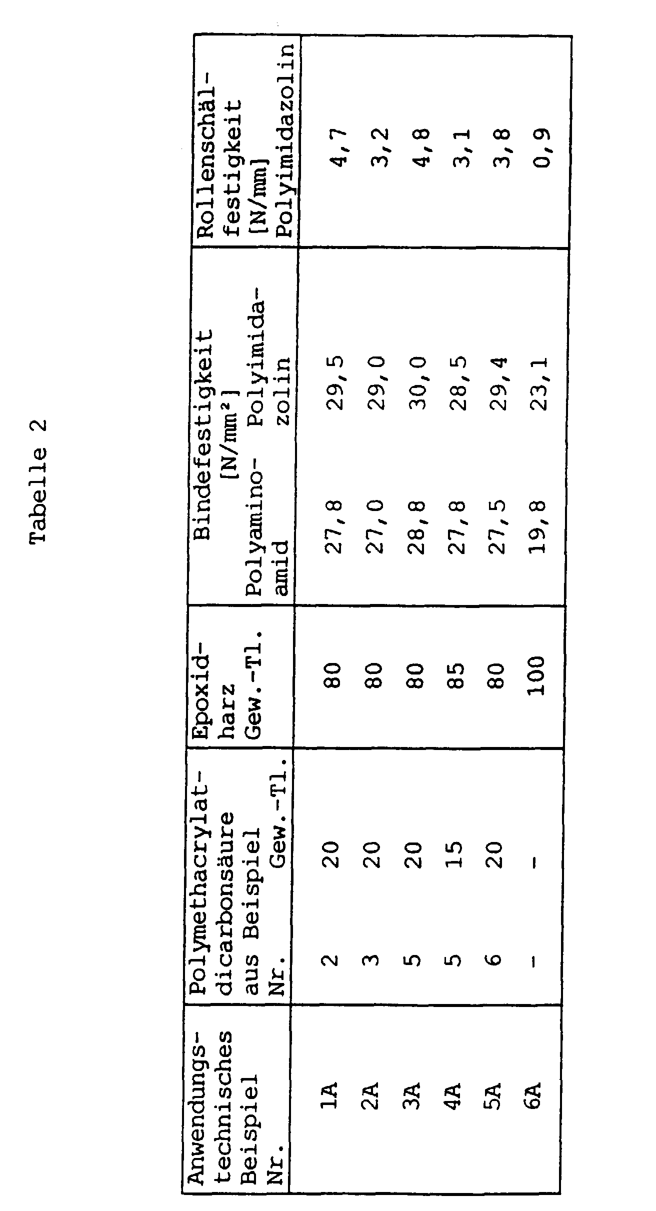

## Patentansprüche

1. α,ω-Polymethacrylatdicarbonsäuren der allgemeinen Formel 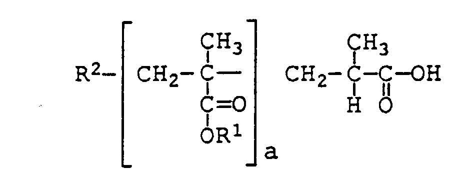 wobei
R¹ ein gegebenenfalls halogenierter Alkylrest mit 1 bis 22 Kohlenstoffatomen ist, wobei der Rest R¹ im polymeren Molekül unterschiedliche Bedeutung annehmen kann,
R² der Rest eines an sich bekannten Kettenreglers, welcher endständig eine -COOH Gruppe aufweist, ist und
a einen Wert von Triglycidylisocyanurat, ≥ 4 hat.

2. α,ω-Polymethacrylatdicarbonsäuren nach Anspruch 1, dadurch gekennzeichnet, daß der Rest R²
(I) ein Rest der allgemeinen Formel -S-R³-COOH ist, wobei R³ einen gegebenenfallls verzweigten zweiwertigen Alkylenrest mit 1 bis 8 Kohlenstoffatomen bedeutet, oder
(II) ein Rest der allgemeinen Formel 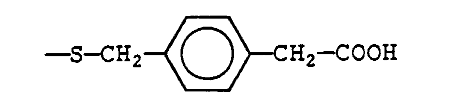 ist.

3. Verfahren zur Herstellung der α,ω-Polymethacrylatdicarbonsäuren nach Anspruch 1 oder 2, dadurch gekennzeichnet, daß man Methacrylsäureester der allgemeinen Formel 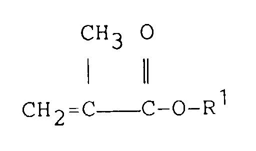 in Gegenwart von Kettenreglern, welche endständig eine -COOR⁴ Gruppe aufweisen, wobei R⁴ ein Wasserstoffrest oder eine Alkylgruppe mit 1 bis 4 Kohlenstoffatomen ist, radikalisch polymerisiert und das erhaltene Polymerisat der vereinfachten allgemeinen Formel 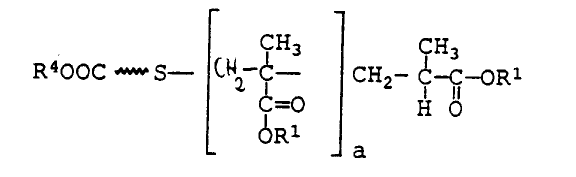 unter milden Bedingungen mit, bezogen auf R⁴ = Alkylrest und R¹ = Alkylrest, jeweils 1- bis 2molaren Mengen Alkalihydroxid verseift und durch Neutralisation mit Säure in die gewünschten α,ω-Polymethacrylatdicarbonsäuren überführt.

4. Verfahren nach Anspruch 3, dadurch gekennzeichnet, daß man die Verseifung bei Temperaturen von 80 bis 100 °C und bei Normaldruck oder einem bis auf 5 bar erhöhten Druck durchführt.

5. Verfahren nach Anspruch 3, dadurch gekennzeichnet, daß man zur Freisetzung der Carbonsäuren Mineralsäure, insbesondere Phosphorsäure oder Salzsäure, verwendet.

6. Verwendung der Verbindungen nach Anspruch 1 oder 2 als alleinige oder anteilige Komponente zur Herstellung oder Modifizierung von Polyepoxiden, Polyestern, Polyamiden, Alkydharzen oder Polyurethanen.

## Claims

1. α,ω-Polymethacrylate dicarboxylic acids of the general formula 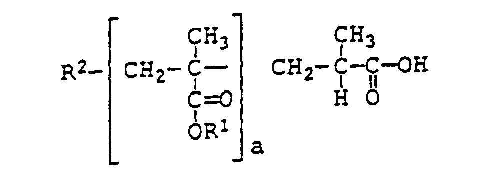 where
R¹ is a halogenated or non-halogenated alkyl radical having from 1 to 22 carbon atoms, where the radicals R¹ in the polymeric molecule may have different meanings,
R² is the radical of a chain regulator known per se which is terminated by a -COOH group, and
a has a value of ≥ 4.

2. α,ω-Polymethacrylate dicarboxylic acids according to Claim 1, characterized in that the radical R²
(I) is a radical of the general formula -S-R³-COOH, where R³ is a branched or unbranched bivalent alkylene radical having from 1 to 8 carbon atoms, or
(II) is a radical of the general formula

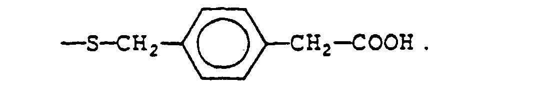

3. Process for preparing α,ω-polymethacrylate dicarboxylic acids according to Claim 1 or 2, characterized in that methacrylates of the general formula 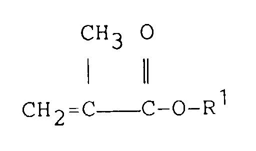 are subjected to free-radical polymerization in the presence of chain regulators having a terminal -COOR⁴ group, where R⁴ is a hydrogen radical or an alkyl group having from 1 to 4 carbon atoms, and the resultant polymer of the simplified general formula 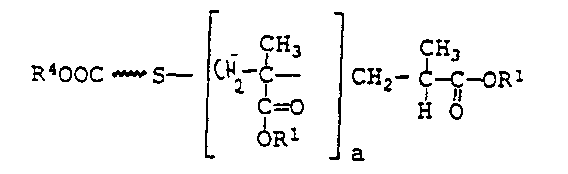 is saponified under mild conditions using in each case from 1 to 2 times the molar amount of alkali metal hydroxide, based on R⁴ = alkyl radical and R¹ = alkyl radical, and is converted into the desired α,ω-polymethacrylate dicarboxylic acid by neutralization with acid.

4. Process according to Claim 3, characterized in that the saponification is carried out at a temperature of from 80 to 100°C and at atmospheric pressure or at an increased pressure of up to 5 bar.

5. Process according to Claim 3, characterized in that an inorganic acid, in particular phosphoric acid or hydrochloric acid, is used to liberate the carboxylic acids.

6. Use of the compounds according to Claim 1 or 2 as sole or joint component in the preparation or modification of polyepoxides, polyesters, polyamides, alkyd resins or polyurethanes.

## Revendications

1. Acides α,ω-dicarboxyliques de polyméthacrylate répondant à la formule générale 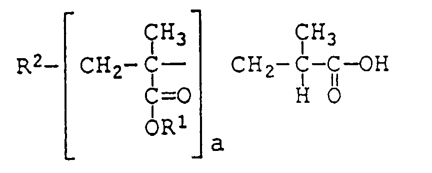 où
R¹ est un reste alkyle éventuellement halogéné ayant de 1 à 22 atomes de carbone, le reste R¹ pouvant prendre des significations différentes dans la molécule polymère,
R² est le reste d'un régulateur de chaîne connu en soi, qui comporte un groupe -COOH en position terminale, et
a a une valeur ≥ 4.

2. Acides α,ω-dicarboxyliques de polyméthacrylate selon la revendication 1, caractérisés en ce que le reste R²
(I) est un reste répondant à la formule générale -S-R³-COOH, où R³ signifie un reste alkylène bivalent éventuellement ramifié, ayant de 1 à 8 atomes de carbone, ou
(II) est un reste répondant à la formule générale

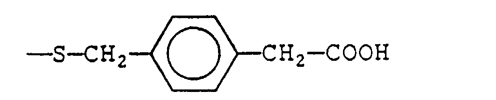

3. Procédé de préparation des acides α,ω-dicarboxyliques de polyméthacrylate selon la revendication 1 ou 2, caractérisé en ce qu'on effectue la polymérisation radicalaire d'esters d'acides méthacryliques répondant à la formule générale 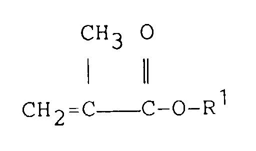 en présence de régulateurs de chaîne, qui comportent un groupe -COOR⁴ en position terminale, où R⁴ est un reste d'hydrogène ou un groupe alkyle ayant de 1 à 4 atomes de carbone, et on saponifie le polymère obtenu répondant à la formule générale simplifiée 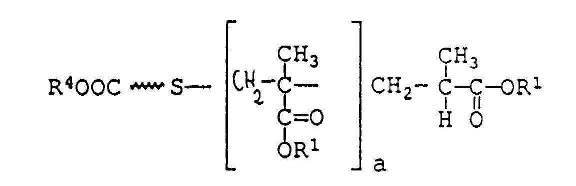 dans des conditions modérées, avec, par rapport à R⁴ = un reste alkyle et R¹ = un reste alkyle, un hydroxyde alcalin en des quantités molaires respectives de 1 à 2 fois, et on transforme le produit en les acides α,ω-dicarboxyliques de polyméthacrylate souhaités par neutralisation avec un acide.

4. Procédé selon la revendication 3, caractérisé en ce qu'on effectue la saponification à des températures de 80 à 100°C et à la pression normale ou à une pression augmentée allant jusqu'à 5 bars.

5. Procédé selon la revendication 3, caractérisé en ce qu'on utilise un acide minéral, en particulier l'acide phosphorique ou l'acide chlorhydrique, pour la libération des acides carboxyliques.

6. Utilisation des composés selon la revendication 1 ou 2 comme composants uniques ou partiels pour la préparation ou la modification de polyépoxides, de polyesters, de polyamides, de résines alkydes ou de polyuréthanes.
